# EUROPEAN PATENT APPLICATION

(11) **EP 4 345 133 A1**
(43) Date of publication of application: **03.04.2024**
(21) Application number: 23199916.0
(22) Date of filing: 26.09.2023
(51) Int. Cl.: C08L 1/02, C08L 67/02, C08L 67/04, C08K 5/521

(54) **MOLDING MATERIAL**

(30) Priority: 27.09.2022 JP 2022153437
(71) Applicant: Seiko Epson Corporation, Tokyo 160-8801 (JP)
(72) Inventor: FUJITA, Tomohiro, Suwa-shi 392-8502 (JP); YOKOKAWA, Shinobu, Suwa-shi 392-8502 (JP); NAKAJIMA, Chieko, Suwa-shi 392-8502 (JP)
(74) Representative: Lewis Silkin LLP

(57) **Abstract**

A molding material is a molding material including linear alkyl-based polyester, highly polar polyester, and cellulose fibers, in which a content of the linear alkyl-based polyester is greater than a content of the highly polar polyester, and a total content of the linear alkyl-based polyester and the highly polar polyester is less than or equal to a content of the cellulose fibers.

## Description

The present application is based on, and claims priority from JP Application Serial Number 2022-153437, filed September 27, 2022, the disclosure of which is hereby incorporated by reference herein in its entirety.

### BACKGROUND

### 1. Technical Field

The present disclosure relates to a molding material.

### 2. Related Art

In the related art, molding materials containing cellulose fibers, resins, and the like have been known. For example, JP-A-2000-6142 discloses a composite material containing fibers derived from paper and a biodegradable resin.

However, the composite material described in JP-A-2000-6142 has a problem of difficulty in improving the strength of a molded article. Specifically, both the impact strength and the bending strength are difficult to achieve at the same time, and thus the molded article is deformed, cracked, and the like in some cases. Further, the impact strength tends to be decreased when the content of fibers such as cellulose fibers is increased. That is, there has been a demand for a molding material that improves the strength of a molded article.

### SUMMARY

According to an aspect of the present disclosure, there is provided a molding material including: linear alkyl-based polyester; highly polar polyester; and cellulose fibers, in which a content of the linear alkyl-based polyester is greater than a content of the highly polar polyester, and a total content of the linear alkyl-based polyester and the highly polar polyester is less than or equal to a content of the cellulose fibers.

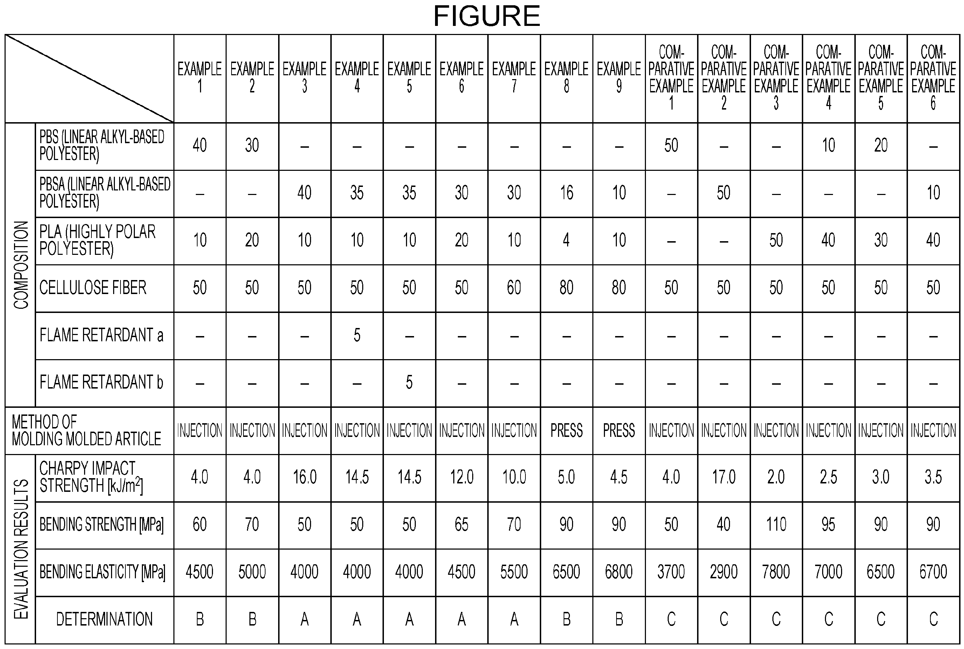

### BRIEF DESCRIPTION OF THE DRAWING

FIGURE is a table showing compositions and evaluation results of molding materials according to examples and comparative examples.

### DESCRIPTION OF EMBODIMENTS

### 1. Molding material

A molding material according to the present embodiment contains linear alkyl-based polyester, highly polar polyester, and cellulose fibers. A known molding method such as injection molding or press working can be applied to the molding material. A molded article produced from the molding material is suitable for various containers, office equipment such as sheets and printers, and housings of home electric appliances, as substitutes for polystyrene and the like. Hereinafter, various raw materials contained in the molding material will be described.

### 1.1. Linear alkyl-based polyester

The linear alkyl-based polyester has thermoplasticity and melts to bind the cellulose fibers when a molded article is produced from the molding material. Further, the linear alkyl-based polyester and the cellulose fibers are responsible for the physical properties of the molded article. Particularly, the linear alkylene group increases the toughness and improves mainly the impact strength of the molded article.

The linear alkyl-based polyester contains, as raw material monomers, an alkyl dicarboxylic acid having an alkyl group with 2 or more and 8 or less carbon atoms and an alkylene diol having an alkylene group with 2 or more and 8 or less carbon atoms. The linear alkyl-based polyester is formed by copolymerizing the above-described two kinds of raw material monomers. The linear alkyl-based polyester is formed by copolymerizing the above-described two kinds of raw material monomers by a known synthesis method.

Examples of the alkyl dicarboxylic acid include linear saturated aliphatic dicarboxylic acids such as succinic acid, glutaric acid, adipic acid, pimelic acid, suberic acid, azelaic acid, and sebacic acid. Among these, one or more kinds thereof are used for the synthesis of the linear alkyl-based polyester.

Examples of the alkylene diol include dihydric alcohols such as 1,2-ethanediol, 1,3-propanediol, 1,4-butanediol, 1,5-pentanediol, 1,6-hexanediol, 1,7-heptanediol, and 1,8-octanediol. Among these, one or more kinds thereof are used for the synthesis of the linear alkyl-based polyester. The above-described two kinds of raw material monomers are relatively easily available and can be applied for industrial use or commercial use.

It is preferable that the molding material contain one or more of polybutylene succinate, polybutylene succinate adipate, and polyethylene diadipate as the linear alkyl-based polyester. Since these linear alkyl-based polyesters have biodegradability, an environmental load of the molded article can be reduced.

### 1.2. Highly polar polyester

The highly polar polyester improves the compatibility between the cellulose fibers and the linear alkyl-based polyester. In this manner, the wettability of the linear alkyl-based polyester with respect to the cellulose fibers is increased, and mainly the bending strength of the molded article is improved.

The highly polar polyester has a molecular structure with relatively high polarity and has one or more oxygen atoms for two carbon atoms in a repeating structure derived from the raw material monomer. Specifically, the highly polar polyester contains raw material monomers such as lactic acid, hydroxybutyric acid, oxysuccinic acid, citric acid, malonic acid, succinic acid, serine, threonine, acrylic acid, methyl acrylate, and vinyl acetic acid, as the raw material monomers.

Specifically, the highly polar polyester contains one or more of polylactic acid, polyhydroxybutyric acid, polyacrylic acid, polymethyl acrylate, and polyvinyl acetate. Among these, from the viewpoint of reducing the environmental load, it is preferable that the highly polar polyester contain one or more of polylactic acid and polyhydroxybutyric acid which have biodegradability. Further, the highly polar polyester may be a copolymer having a structure derived from lactic acid or acetic acid in a molecular structure such as polyethylene succinic acid.

### 1.3 Cellulose fibers

The cellulose fibers function as a filler in the molded article and contributes to improvement of the physical properties such as bulkiness of the molding material and strength of the molded article.

The cellulose fibers are derived from plants and relatively abundant natural materials. Therefore, reduction of the environmental load is promoted when cellulose fibers are used as compared with a case where synthetic fibers are used. The cellulose fibers are excellent in terms of procurement of the raw materials and the cost. Further, the cellulose fibers have theoretically high strength among various fibers and contribute to improvement of the strength of the molded article. Used paper, used cloth, or the like may be reused as the cellulose fibers in addition to using virgin pulp.

The cellulose fibers are formed mainly of cellulose, but may contain components other than cellulose. Examples of the components other than cellulose include a hemicellulose and lignin. Further, the cellulose fibers may be subjected to a treatment such as bleaching.

From the viewpoint of improving the appearance of the surface of the molded article, the fiber length of the cellulose fibers is preferably less than 500 µm and more preferably less than 50 µm. The fiber length of the cellulose fibers is acquired by the method in conformity with ISO 16065-2: 2007.

Here, the content of the linear alkyl-based polyester in the molding material is greater than the content of the highly polar polyester. In this manner, the impact strength and the bending strength of the molded article can be improved in a well-balanced manner.

The total content of the linear alkyl-based polyester and the highly polar polyester in the molding material is less than or equal to the content of the cellulose fibers. In this manner, the functions of the cellulose fibers as a filler can be remarkably exhibited in the molded article.

When the content of the linear alkyl-based polyester in the molding material is set to 100 parts by mass, the content of the highly polar polyester is 10 parts by mass or greater and 70 parts by mass or less, and the content of the cellulose fibers is 110 parts by mass or greater and 570 parts by mass or less. In this manner, the strength of the molded article can be further improved.

### 1.4. Additives

The molding material may contain a flame retardant as an additive. A known substance can be employed as the flame retardant. Examples of the flame retardant include an inorganic flame retardant such as an antimony compound, a metal hydroxide, a nitrogen compound, or a boron compound, and an organic flame retardant such as a bromine compound or a phosphorus compound.

The content of the flame retardant in the molding material is set to 1 part by mass or greater and 20 parts by mass or less when the total content of the linear alkyl-based polyester, the highly polar polyester, and the cellulose fibers is set to 100 parts by mass. In this manner, the flame retardance of the molded article can be improved.

The molding material may contain other additives in addition to the flame retardant. Examples of the other additives include a colorant, an insect repellent, a fungicide, an antioxidant, an ultraviolet absorbing agent, an aggregation inhibitor, and a release agent. Further, the molding material may contain other resins in addition to the linear alkyl-based polyester and the highly polar polyester.

### 2. Method of producing molding material

A method of producing the molding material will be described. A known method can be employed to produce the molding material. Specifically, for example, the following method can be employed.

First, the above-described raw materials are kneaded by a single-screw kneader or a twin-screw kneader to form strands. Next, a pelletizing process is performed on the raw materials to obtain a pellet-like molding material.

Further, the following method may be employed as the method of producing the molding material. First, used paper or a pulp material is coarsely crushed with a shredder to form cellulose fibers. Further, the cellulose fibers, the linear alkyl-based polyester, and the highly polar polyester are weighed and kneaded. Next, the kneaded raw materials are accumulated in air to obtain sheet-like accumulations. Since the accumulations contain a large amount of air and thus have a small density, the density thereof is increased by compressing the accumulations with a calender device to remove the air. Next, the accumulations are heated with a heating furnace in a non-contact manner and heated and pressed with a heat press.

The accumulations are heated with the heating furnace and the heat press at a temperature higher than the melting temperature of the linear alkyl-based polyester and the highly polar polyester by approximately 20°C. In this manner, uneven distribution of the raw materials is suppressed, and a sheet in which the raw materials are dispersed is formed.

Next, the sheet is cut into a desired shape with a shredder so that a pellet-like molding material is obtained. The desired shape of the molding material is not particularly limited, but a substantially cubic shape with a volume of 2 cubic mm to 5 cubic mm may be employed. The molding material is produced by the method described above. Further, the method of producing the molding material is not limited to the method described above.

According to the present embodiment, the following effects are obtained. The strength of the molded article can be improved. The impact strength and the bending strength are improved in a well-balanced manner by using the linear alkyl-based polyester and the highly polar polyester in combination. Therefore, it is possible to provide a molding material that improves the strength of a molded article.

### 2. Examples and comparative examples

Hereinafter, the effects of the present disclosure will be described in more detail based on examples and comparative examples. FIGURE shows the compositions of raw materials and the evaluation results of molded articles related to each of the molding materials in Examples 1 to 9 and Comparative Examples 1 to 6.

In the columns of the composition in FIGURE, the numerical values are in units of % by mass, and "-" in the columns without description of numerical values denotes that the corresponding material is not contained. In the description of the raw material names, abbreviations are used for some names. Each abbreviation will be described below. In the description below, Examples 1 to 9 will also be simply and collectively referred to as examples, and Comparative Examples 1 to 6 will also be simply and collectively referred to as comparative examples. Further, the present disclosure is not limited to the following examples.

Based on the compositions of FIGURE, molding materials of the examples and the comparative examples were produced. Specifically, the linear alkyl-based polyester, the highly polar polyester, and the cellulose fibers were weighed, put into a twin-screw kneader KZW15TW-45MG (manufactured by Technovel Corporation), and kneaded. The kneading was performed under conditions of a maximum heating temperature of 180°C and an extrusion discharge amount of 1 kg/hr. Next, the materials were processed into strands, and pellet-like molding materials were obtained by a pelletizer.

The details of the abbreviations and the trade names listed in FIGURE are as follows.
Linear alkyl-based polyester
   · PBS: polybutylene succinate, trade name, BioPBS FZ71PB, manufactured by Mitsubishi Chemical Corporation
   · PBSA: polybutylene succinate adipate, trade name, BioPBS FD92PB, manufactured by Mitsubishi Chemical Corporation
Highly polar polyester
   · PLA: polylactic acid, trade name, TERRAMAC (registered trademark) TE-2000, manufactured by Unitika Ltd.
Cellulose fibers: trade name, Guaiba BEKP, manufactured by CMPC
Flame retardant
   · Flame retardant a: phosphazene-based flame retardant, trade name, RABITLE (registered trademark) FP-110, manufactured by Mitsui Fine Chemicals, Inc.
   · Flame retardant b: phosphoric acid ester-based flame retardant, trade name, Exolit (registered trademark) OP1230, manufactured by Clariant AG

Test pieces for evaluation were prepared by injection molding or press working using the molding materials of the examples and the comparative examples. Specifically, both the injection molding and the press working were carried out by setting the heating temperature of the molding materials to 200°C. Further, THX40-5V (manufactured by Nissei Plastic Industrial Co., Ltd.) was used as the injection molding device, and a hydraulic press PHKS-40ABS (manufactured by Towa Seiki Co., Ltd.) was used as the press working device.

Here, the content of PBS was set to 40% by mass, the content of PLA was set to 10% by mass, and the content of the cellulose fibers was set to 50% by mass, thereby preparing a molded article of Example 1 by injection molding.

A molded article of Example 2 was prepared in the same manner as in Example 1 except that the content of PBS was decreased and the content of PLA was increased.

A molded article of Example 3 was prepared in the same manner as in Example 1 except that PBSA was used in place of PBS.

A molded article of Example 4 was prepared in the same manner as in Example 3 except that the content of PBSA was decreased to 5% by mass, and 5% by mass of the flame retardant a was added.

A molded article of Example 5 was prepared in the same manner as in Example 4 except that the flame retardant b was used in place of the flame retardant a.

A molded article of Example 6 was prepared in the same manner as in Example 3 except that the content of PBSA was decreased to 10% by mass and the content of the PLA was increased to 10% by mass.

A molded article of Example 7 was prepared in the same manner as in Example 6 except that the content of PLA was decreased to 10% by mass and the content of the cellulose fibers was increased to 10% by mass.

A molded article of Example 8 was prepared in the same manner as in Example 7 except that the content of PBSA was decreased to 14% by mass, the content of PLA was decreased to 6% by mass, the content of the cellulose fibers was increased to 20% by mass, and the molded article was prepared by press working.

A molded article of Example 9 was prepared in the same manner as in Example 8 except that the content of PBSA and the content of PLA were set to 10% by mass.

The content of PBS was set to 50% by mass, and the content of the cellulose fibers was set to 50% by mass, thereby preparing a molded article of Comparative Example 1 by injection molding.

A molded article of Comparative Example 2 was prepared in the same manner as in Comparative Example 1 except that PBSA was used in place of PBS.

A molded article of Comparative Example 3 was prepared in the same manner as in Comparative Example 1 except that PLA was used in place of PBS.

The content of PBS was set to 10% by mass, the content of PLA was set to 40% by mass, and the content of the cellulose fibers was set to 50% by mass, thereby preparing a molded article of Comparative Example 4 by injection molding.

A molded article of Comparative Example 5 was prepared in the same manner as in Comparative Example 4 except that the content of PBS was increased to 10% by mass and the content of PLA was decreased to 10% by mass.

A molded article of Comparative Example 6 was prepared in the same manner as in Comparative Example 4 except that PBSA was used in place of PBS.

The test was performed by employing the Charpy impact strength as an index of the impact strength using a test method in conformity with ISO 179 (JIS K 7111). As the shape of the test piece, a rectangular plate with a long side of 80 mm ± 2 mm, a short side of 4.0 mm ± 0.2 mm, and a thickness of 10.0 mm ± 0.2 mm was used. An impact tester IT (manufactured by Toyo Seiki Seisaku-sho, Ltd.) was used as the test device. In the Charpy impact test, the hammer weight was set to 4 J (WR 2.14 N/m), the lifting angle was set to 150°, the remaining notch width was set to 8.0 mm ± 0.2 mm, and the notch angle was set to 45°.

The test was performed by employing the bending properties as an index of the bending strength using a test method in conformity with ISO 178 (JIS K 7171). As the shape of the test piece, a rectangular plate with a long side of 80 mm ± 2 mm, a short side of 10.0 mm ± 0.2 mm, and a thickness of 4.0 mm ± 0.2 mm was used. Further, the test was performed by using 68TM-30 (manufactured by Instron) as the test device and setting the distance between fulcrums to 64 mm.

The strength of each molded article was determined based on the obtained test results according to the following determination standards.

### Determination standards

A: The Charpy impact strength was 7 kJ/m² or greater, and the bending elasticity was 4000 MPa or greater.
B: The Charpy impact strength was 4 kJ/m² or greater and less than 7 kJ/m², and the bending elasticity was 4000 MPa or greater.
C: The Charpy impact strength was 4 kJ/m² or greater and less than 7 kJ/m², and the bending elasticity was 4000 MPa or greater.
D: The Charpy impact strength was less than 4 kJ/m², and the bending elasticity was less than 4000 MPa.

As shown in FIGURE, the molded articles in all the examples were evaluated at a level of B or higher, and particularly the molded articles in Examples 3 to 6 were evaluated as A. As shown in the results, it was found that the strength of the molded articles was improved in the examples. On the contrary, it was found that the molded articles were evaluated at a level of C or lower and the strength of the molded articles was difficult to improve in all the comparative examples.

## Claims

1. A molding material comprising:
linear alkyl-based polyester;
highly polar polyester; and
cellulose fibers,
wherein a content of the linear alkyl-based polyester is greater than a content of the highly polar polyester, and
a total content of the linear alkyl-based polyester and the highly polar polyester is less than or equal to a content of the cellulose fibers.

2. The molding material according to claim 1,
wherein when the content of the linear alkyl-based polyester is set to 100 parts by mass,
the content of the highly polar polyester is 10 parts by mass or greater and 70 parts by mass or less, and
the content of the cellulose fibers is 110 parts by mass or greater and 570 parts by mass or less.

3. The molding material according to claim 2,
wherein the linear alkyl-based polyester contains, as raw material monomers, an alkyl dicarboxylic acid having an alkylene group with 2 or more and 8 or less carbon atoms and an alkylene diol having an alkylene group with 2 or more and 8 or less carbon atoms.

4. The molding material according to claim 3,
wherein the linear alkyl-based polyester contains one or more of polybutylene succinate, polybutylene succinate adipate, and polyethylene adipate.

5. The molding material according to claim 2,
wherein the highly polar polyester has one or more oxygen atoms for two carbon atoms in a repeating structure derived from a raw material monomer.

6. The molding material according to claim 5,
wherein the highly polar polyester contains one or more of polylactic acid and polyhydroxybutyric acid.

7. The molding material according to claim 2,
wherein the cellulose fibers have a fiber length of less than 500 µm.

8. The molding material according to claim 2, further comprising:
a flame retardant,
wherein when a total content of the linear alkyl-based polyester, the highly polar polyester, and the cellulose fibers is set to 100 parts by mass, the content of the flame retardant is 1 part by mass or greater and 20 parts by mass or less.
